# EUROPÄISCHE PATENTSCHRIFT

(11) **EP 0 682 559 B1**
(45) Veröffentlichungstag und Bekanntmachung des Hinweises auf die Patenterteilung: **16.04.1997**
(21) Anmeldenummer: 94931485.0
(22) Anmeldetag: 17.11.1994
(51) Int. Cl.: B01D 61/14

(54) **VERFAHREN UND VORRICHTUNG ZUM EINDICKEN VON FEST-/FLÜSSIG-GEMISCHEN MITTELS MEMBRANTECHNOLOGIE**
PROCESS AND DEVICE FOR CONCENTRATING SOLID/LIQUID MIXTURES BY MEMBRANE TECHNOLOGY
PROCEDE ET DISPOSITIF DE CONCENTRATION DE MELANGES SOLIDES/LIQUIDES SELON UNE TECHNOLOGIE FAISANT APPEL A DES MEMBRANES

(30) Priorität: 03.12.1993 CH 3608/93
(43) Veröffentlichungstag der Anmeldung: 22.11.1995
(73) Patentinhaber: BUCHERGUYER AB MASCHINENFABRIK, CH-8166 Niederweningen (CH)
(72) Erfinder: HARTMANN, Eduard, CH-5425 Schneisingen (CH)
(74) Vertreter: Seeger, Jan
(86) Internationale Anmeldenummer: CH9400221
(87) Internationale Veröffentlichungsnummer: WO9515209

(56) Entgegenhaltungen:
- EP-A- 0 353 422
- WO-A-88/06475
- DE-A- 2 440 643

## Beschreibung

Die Erfindung betrifft ein Verfahren zum Eindicken von Fest/Flüssig- Gemischen mittels Membrantechnologie unter Verwendung einer Anlage mit Membranmodulen mit Retentatkreislauf, sowie eine Einrichtung zu dessen Durchführung. Ein derartiges Verfahren und eine derartige Vorrichtung werden zum Beispiel in der EP-A-0353422 beschrieben.

Zur Zeit sind noch keine speziellen Anlagen für die Eindickung von Retentaten, welche bei der Ultrafiltration oder bei der Mikrofiltration entstehen, bekannt. Bei der Klärung von Fruchtsäften mittels solcher Filtrations-Technologien werden in den Retentat- Rückständen Eindickungs- Zustände von bis zu ca. 50 Vol.% Nasstrubanteil, gemessen im Zentrifugentest erreicht. D.h. diese Rückstände geben in der Zentrifuge noch mindestens 50 Vol.% Flüssigkeit ab. Solche Retentate sind noch fliessfähig und müssen für die Entsorgung noch speziell mittels Vakuum- Drehfiltern aufgearbeitet werden.

Vakuum- Drehfilter sind Anschwemmfilter und benötigen für die Filtration Kiselgur, welche beschafft und ebenfalls wieder entsorgt werden muss. Eine Entsorgung von Retentat über das Abwasser ist kaum mehr möglich, sodass Retentat eingedickt und auf eine Deponie geschüttet oder verbrannt werden muss. In beiden Fällen ist ein möglichst geringer Wasseranteil im Retentat wirtschaftlich sehr von Bedeutung. Für eine weitere Eindickung des Retentates über die genannten 50 Vol.% hinaus erscheinen nur speziell dafür ausgerüstete Membrananlagen zweckmässig. Ähnliche Problemstellungen treten auch in anderen Anwendungen der Membrantechnologie ausserhalb des Bereiches Fruchtsaft auf.

Aus JOURNAL OF FOOD SCIENCE, Volume 51, No. 3, 1986, Seiten 559-563 ist eine Anlage mit Metall- Membran-Ultrafiltration mit einfachem Durchgang zur verbesserten Apfelsaft- Ausbeute bekannt. Saft- Ausbeuten bis 85 % wurden damit erreicht, jedoch erscheinen solche Anlagen mit einfachem Durchgang für eine Eindickung von Retentaten in grösserem Umfange nicht zweckmässig.

Der Erfindung liegt deshalb die Aufgabe zugrunde, ein Verfahren zum Eindicken von Fest/Flüssig- Gemischen mittels Membrantechnologie und eine Vorrichtung zu dessen Durchführung anzugeben.

Gemäss der Erfindung wird die Lösung dieser Aufgabe unter Verwendung einer Anlage mit Membranmodulen mit Retentatkreislauf dadurch erreicht, dass mit einer im Batch- Verfahren oder quasikontinuierlich betriebenen Membrananlage in einem ersten Schritt der Retentatförderstrom in den Membranmodulen annähernd konstant gehalten wird, bis aufgrund des Eindickvorganges des Retentates der Einlaufdruck in die Membranmodule einen vorgegebenen Sollwert überschreitet, dass in einem zweiten Schritt durch Reduktion des Retentatförderstromes der Einlaufdruck so lange konstant gehalten wird, bis ein Sollwert des Eindickungsgrades des Retentates erreicht ist und dass dann in einem dritten Schritt das eingedickte Retentat aus dem Kreilauf abgeführt wird.

Eine Einrichtung zur Durchführung dieses Verfahrens zeichnet sich aus durch a) einen Sensor zur Erfassung des Einlaufdruckes der Membranmodule, b) mindestens eine volumetrisch fördernde Pumpe im Retentatkreislauf, die mit einer Einrichtung zur Veränderung der Förderleistung ausgerüstet ist, und c) eine Auslassleitung zum Abführen des Retentates aus dem Retentatkreislauf.

Weitere Merkmale und vorteilhafte Ausgestaltungen der Erfindung sind den abhängigen Patentansprüchen zu entnehmen.

Ausführungsbeispiele der Erfindung sind in der folgenden Beschreibung und den Figuren der Zeichnung näher erläutert. Es zeigen:
Fig. 1 ein Schema einer erfindungsgemässen mehrstufigen Eindickanlage mit einem Mengenteiler,
Fig. 2 ein Schema einer erfindungsgemässen mehrstufigen Eindickanlage mit mehreren Pumpen zur Retentat- Umwälzung,
Fig. 3 ein Schema einer erfindungsgemässen mehrstufigen Eindickanlage für Produkte mit groben Feststoffanteilen,
Fig. 4 ein Schema einer erfindungsgemässen einstufigen Eindickanlage,
Fig. 5 ein Schema einer erfindungsgemässen einstufigen Eindickanlage mit geschlossenem Retentatkreislauf ohne Chargenbehälter für quasikontinuierlichen Betrieb,
und
Fig. 5a ein Zeitdiagramm des Retentatausflusses F4 und des Produktzuflusses F1 bei einer Anlage gemäss Fig. 5.

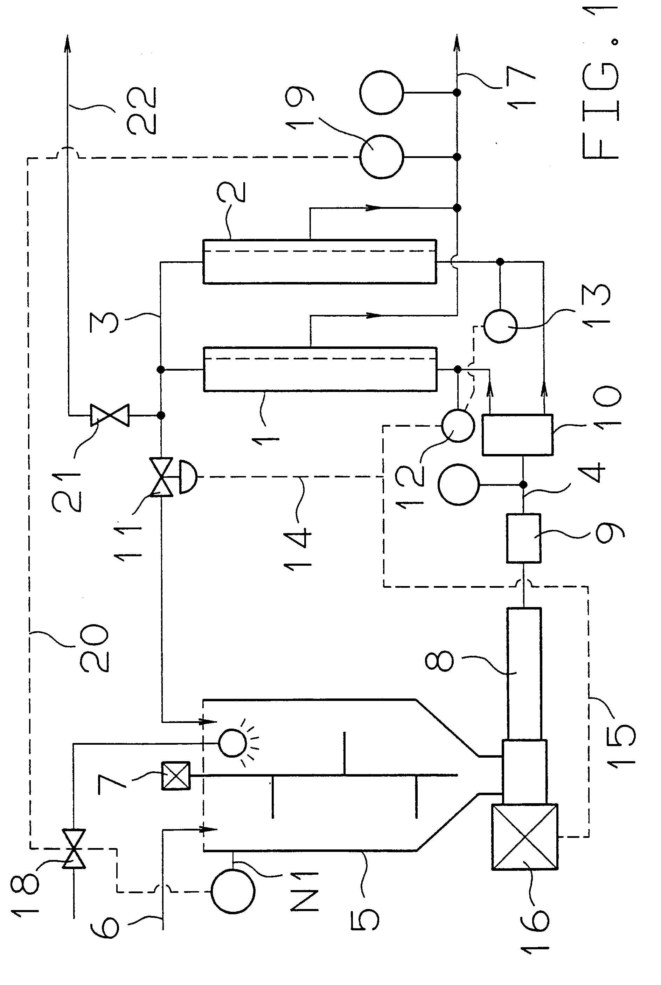

Fig. 1 zeigt schematisch zwei Filtrations- Modulpasse 1 und 2. Jeder Modulpass umfasst mehrere Dia- Filtrationsmodule in Serie, und jedes Filtrationsmodul besteht aus einem oder mehreren Rohren, deren Wände als Filtermembranen ausgebildet sind. Solche Modulpasse sind bekannt und hier nicht im Detail dargestellt. Beide Modulpasse 1, 2 sind durch Leitungen 3, 4 mit einem Behälter 5 für die einzudickende Rohware in einem Retentatkreis verbunden. In den Behälter 5 wird über eine Leitung 6 die Rohware zugeführt, die vorteilhaft bereits vorfiltriert und im Fall von Fruchtsäften auf etwa 40-70 % Nasstrubanteil eingedickt ist.

Der Behälter 5 weist eine Rührvorrichtung 7 auf und ist an eine Förderpumpe 8 angeschlossen, welche die Rohware über einen Homogenisator 9, die Leitung 4 und einen Mengenteiler 10 den Retentateingängen der Modulpasse 1 und 2 zufördert. Der Mengenteiler 10 erfüllt die Aufgabe, auch bei ungleichen Einlaufdrücken P1 und P2 an den Modulen der Passe 1, 2 für möglichst gleiche Anströmmengen der Modulpasse zu sorgen. An den beiden Austritten der Modulpasse 1, 2 werden die beiden Retentat- Teilströme mit der Rückführleitung 3 wieder vereint, und das Retentat fliesst durch ein gesteuertes Ventil 11 zurück in den Behälter 5.

Sobald die Rohware ein Mindestniveau N2 im Behälter 5 erreicht, läuft die Förderpumpe 8 an. In einer Anlaufphase wird das Retentat mit einem bis auf Regelabweichungen konstanten Förderstrom den Modulen der Passe 1, 2 zugeführt. Der für die Filtration erforderliche Transmembrandruck wird als Sollwert der Einlaufdrücke P1, P2 vorgegeben. Diese Einlaufdrücke werden mit Sensoren 12, 13 an den Passen 1, 2 erfasst und über Signalleitungen 14, 15 auf das gesteuerte Ventil 11 und den Motor 16 der Förderpumpe 8 übertragen. So wird der Transmembrandruck durch Verstellung des gesteuerten Ventils 11 konstant gehalten. In den Behälter 5 wird die Rohware weiterhin derart zugeführt, dass ein über dem genannten Mindestniveau N2 liegendes Arbeitsniveau N1 erreicht und dann konstant gehalten wird.

Infolge des Transmembrandruckes fliesst aus den Passen 1, 2 Permeat über eine Leitung 17 ab, und die Konzentration an Anteilen, welche die Membranen der Passen 1, 2 nicht passieren, nimmt im Retentatkreislauf 1, 2, 3, 4, 5 zu. Daher steigt die Viskosität des Retentates, und der Druckaufbau der Drücke P1, P2 beim Durchströmen der Module der Passen 1, 2 nimmt zu. Infolgedessen wird über die Signalleitung 14 das gesteuerte Ventil 11 weiter geöffnet. Sobald der ganze Regelquerschnitt des Ventils 11 frei gegeben ist, steigen die Drücke P1, P2 stärker an. Haben P1, P2 einen Sollwert erreicht, so wird die Zufuhr der Rohware über die Leitung 6 gesperrt, und über ein Ventil 18 wird dem Behälter 5 eine Auswaschflüssigkeit so zugeführt, dass das Arbeitsniveau N1 konstant bleibt.

Als Auswaschflüssigkeit lassen sich Wasser, Alkohol oder andere Lösungsmittel verwenden. Das Retentat wird nun ausgewaschen, und auf der Permeatseite nimmt die Konzentration der im Permeat gelösten Stoffe ab. Handelt es sich um gelöste Feststoffe, so kann deren Anteil über eine Brix- Messung erfolgen. In anderen Fällen können hier auch Messeinrichtungen für andere Grössen, wie pH- Wert, Viskosität, Farbe, el. Leitfähigkeit usw. zum Einsatz kommen.

Sobald im Permeat ein vorgegebener Sollwert unterschritten wird, endet der Auswaschvorgang und das Einlassventil 18 schliesst. Hierfür ist im dargestellten Ausführungsbeispiel ein Brix- Sensor 19 an der Ausgangsleitung 17 vorgesehen, dessen Ausgangssignal über eine Signalleitung 20 dem Einlassventil 18 zugeführt ist. Da die Zufuhr der Rohware ebenfalls unterbrochen bleibt, steigt die Konzentration der durch die Membranen der Passen 1, 2 zurückgehaltenen Stoffe im Retentatkreislauf an. Dies bewirkt einen weiteren Anstieg der Viskosität und bei kontantem Durchfluss einen weiteren Anstieg der Einlauf- Drücke P1, P2 an den Passen 1, 2.

Die zuletzt genannten weiteren Anstiege werden aber nun vermieden, und zwar dadurch, dass die Durchflussmenge pro Zeiteinheit so vermindert wird, dass P1 und P2 konstant bleiben. Im Falle der Verwendung einer Schneckenexzenterpumpe als Förderpumpe 8 wird einfach die Schneckendrehzahl mit zunehmender Viskosität reduziert.

Sobald der Durchfluss einen vorgegebenen minimalen Sollwert unterschreitet, oder die gewünschte Eindickung des Retentates erreicht ist, wird dasselbe aus der Anlage ausgestossen. Dies erfolgt über ein Ventil 21 in einer Auslassleitung 22, wobei das gesteuerte Ventil 11 schliesst. Der Ausstossvorgang wird beendet, sobald im Behälter 5 das Mindestniveau N2 erreicht ist.

Anschliessend wird über die Leitung 6 in den Behälter 5 wieder frische Rohware eingeführt und dabei das gesteuerte Ventil 11 geöffnet, das Auslassventil 21 geschlossen und das Niveau im Behälter 5 auf seinen Arbeitspegel N1 eingestellt. Bedingt durch die Regelvorgaben für die Einlaufdrücke P1, P2 der Passe 1, 2 wird sich sie Leistung der Förderpumpe 8 wieder auf ihren anfänglichen Sollwert erhöhen, und das gesteuerte Ventil 11 übernimmt wieder die Regelfunktion für die Drücke P1, P2. Der soweit beschriebene Eindickungs- Vorgang wird einmal oder mehrmals durchgeführt, bis die einzudickende Rohware verarbeitet ist oder aufgrund einer stark abnehmenden Membranleistung eine chemische Reinigung der Membranen der Passe 1, 2 erforderlich wird.

Ist die einzudickende Rohware verarbeitet, so wird das Filtrationsverfahren durch einen Auswaschvorgang beendet. Dazu wird unmittelbar anschliessend an den letzten der oben erwähnten Ausstossvorgänge dem Behälter 5 über das Einlassventil 18 Wasser oder eine andere gleichwirkende Flüssigkeit zugeführt und gleichzeitig das gesteuerte Ventil 11 geöffnet und das Auslassventil 21 geschlossen. Wird hierbei das Arbeitsniveau N1 im Behälter 5 erreicht, so wird nun umgekehrt das Auslassventil 21 wieder geöffnet, das gesteuerte Ventil 11 geschlossen und das mit Wasser vermischte, ausgewaschene Retentat ausgestossen. Dieser Vorgang kann so oft wiederholt werden, bis nahezu alle von den Filtermembranen im Retentat zurückgehaltenen Stoffe ausgestossen sind.

Beim Auswasch- und Retentatverdrängungs- Vorgang hat die Rührvorrichtung 7 im Behälter 5 in Verbindung mit den Homogenisator 9 die Funktion, das zugeführte Wasser möglichst homogen im Retentat zu verteilen. Dies dient dem Ziel, einen besseren Auswascheffekt sowie eine einwandfreie Verdrängung des hochviskosen Retentates aus den Filtrations- Modulen der Passe 1, 2 zu erreichen. Da in diesen Modulen meistens eine Vielzahl von Membran- Röhrchen gleichzeitig parallel angeströmt wird, führen nicht aufgelöste hochviskose Retentatreste zu Fliesstörungen, Durchgangsblockierungen und Verstopfungen in den Röhrchen.

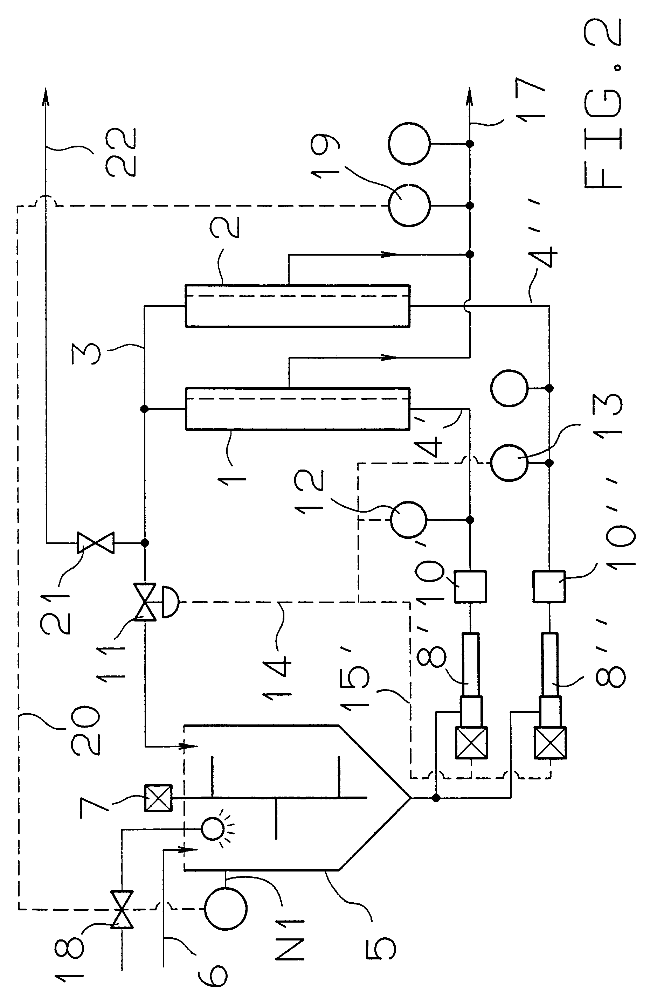

Mit der soweit zu Fig. 1 beschriebenen Anlage ist es möglich, auch in Mehrkanalmodulen und Mehrpassanlagen bei der Verarbeitung von Fruchtsäften eine Retentateindickung mit 100 % Nasstrubanteil im Zentrifugentest zu erreichen. In der in Fig. 2 schematisch dargestellten Anlage weisen bereits erklärte Bezugszeichen auf Bauelemente mit Funktionen wie in Fig. 1 hin. In Fig. 2 ist jedoch auf einen Mengenteiler 10 verzichtet. Dafür ist für jede Passe 1, 2 eine eigene Förderpumpe 8', 8'' vorhanden. Diese beiden Pumpen laufen immer in gleichen Betriebszuständen, welche durch eine gemeinsame Steuerleitung 15' erzeugt werden. Damit sind auch zwei Homogenisatoren 10', 10'' in den Retentat- Zuleitungen 4', 4'' erforderlich.

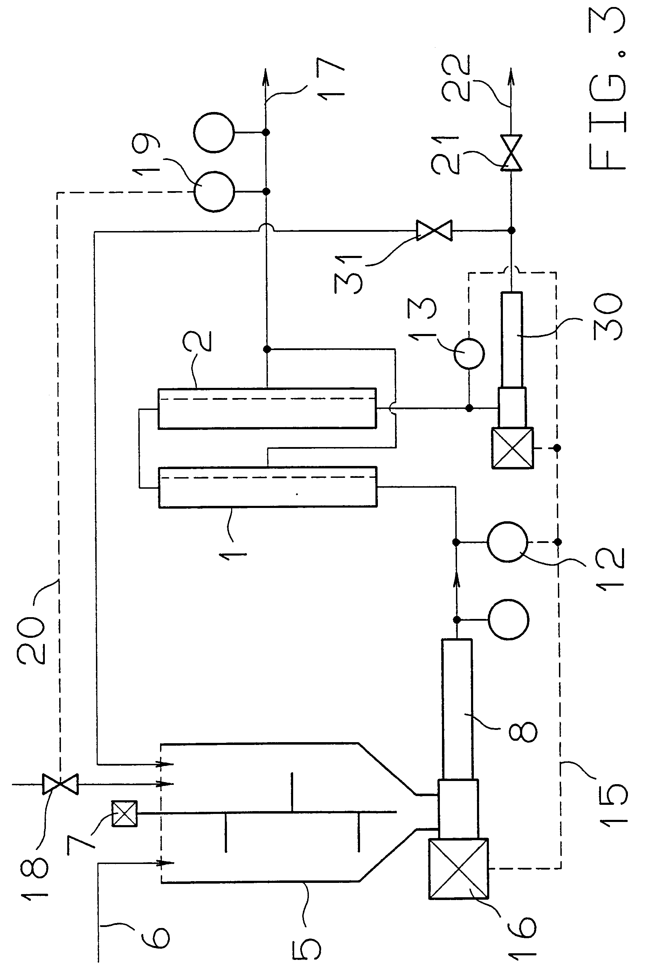

Auch in der in Fig. 3 schematisch dargestellten Anlage weisen bereits genannte Bezugszeichen auf Bauelemente mit den schon erklärten Funktionen hin. In Fig. 3 ist allerdings anstelle des gesteuerten Ventiles 11 eine aus der Druckzone der Passen 1, 2 abpumpende Exzenterschneckenpumpe 30 eingesetzt. Pumpe 30 ist ebenso wie die Förderpumpe 8 im Förderstrom stufenlos verstellbar. Mit dieser Anlage wird der Eindickungsvorgang analog wie zu Fig. 1 beschrieben durchgeführt. Der Verzicht auf das gesteuerte Ventil 11 erlaubt es hier aber, auch Maischen zu entsaften, welche Ventil 11 verstopfen, aber die Funktion von Pumpe 30 nicht stören. Für das Eindicken und Auswaschen ist ein Absperrventil 31 erforderlich.

Wie die Anlagen gemäss Fig. 1 und 2 arbeitet auch jene gemäss Fig. 3 im Batch- Betrieb. Im Vergleich mit der eingangs genannten, aus JOURNAL OF FOOD SCIENCE , 1986, bekannten Anlage mit Metall- Membran- Ultrafiltration hat sie den Vorteil, dass nur eine geringe Anzahl von Modulen in den Passen 1, 2 benötigt wird und dass deren Transmembran- Drücke klein gehalten werden können. Gegenüber den Anlagen gemäss Fig. 1 und 2 bietet jene gemäss Fig. 3 den Vorteil, dass eventuell im Retentat vorhandene grobe Feststoffteile kein Regelventil passieren, welches sie verstopfen könnten. Hier können auch schlecht oder garnicht pressbare Produkte im Fruchtsaft- oder Lebensmittel- Bereich entsaftet und eingedickt werden.

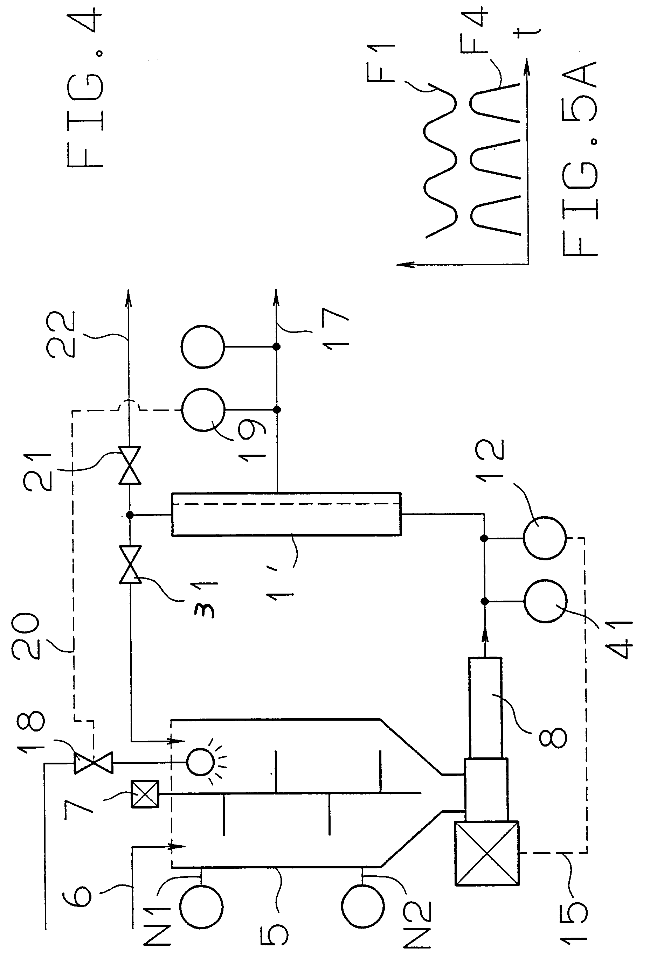

Auch Fig. 4 zeigt eine Anlage, bei der auf ein gesteuertes Ventil 11 zur Retentat- Flussteuerung an den Modulausgängen der Passen 1, 2 verzichtet ist. Der als Sollwert vorgegebene Betriebsdruck P1 der einzigen Passe 1' wird mit dem Sensor 12 erfasst und durch Erhöhung oder Verringerung der Durchflussleistung der Förderpumpe 8 über die Steuerleitung 15 erreicht. Der Auswaschvorgang wird bei Unterschreitung einer als Sollwert vorgegebenen minimalen Durchflussleistung F1 des Retentates eingeleitet. Der Durchfluss F1 wird durch einen Sensor 41 am Ausgang der Förderpumpe 8 erfasst. Die Einleitung des RetentatAusstossvorganges erfolgt analog wie schon zu Fig. 1 beschrieben, mittels der Ventile 21 und 31. Vorteile der zu Fig. 4 beschriebenen Anlage sind geringe Herstellungskosten und ein geringer Regelaufwand.

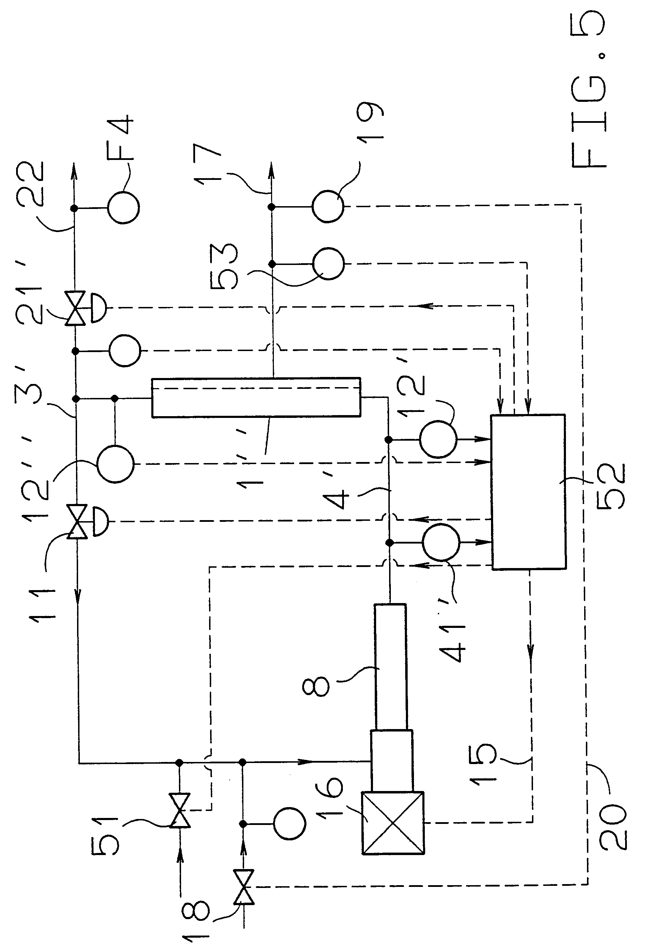

Fig. 5 zeigt eine Variante der schon beschriebenen Anlagen, bei der durch Verzicht auf einen Eingangs- Behälter 5 eine gegen die Aussenluft geschlossene Form erreicht wird. Die Steuerung der Funktionsabläufe erfolgt hier zentral über einen Prozessor 52, dem die mit Sensoren 12', 12'' erfassten Arbeitsdrücke P1, P2 des Retentates am Eingang und Ausgang der Passe 1'' und die Durchflüsse von Retentat von einem Sensor 41' und Permeat von einem Sensor 53 zugeführt sind. Der Prozessor 52 seinerseits erzeugt Steuersignale zur Steuerung des Motors 16 der Förderpumpe 8 über die Leitung 15, des gesteuerten Ventiles 11, eines Rohsaft- Einlassventiles 51 und eines RetentatAuslassventiles 21'. Die Passe 1'' ist mit Hilfe von Verbindungsleitungen 3', 4' in dem geschlossenen Retentatkreislauf über die Förderpumpe 8 verbunden.

Mit der Anlage gemäss Fig. 5 ist es möglich, kontinuierlich oder quasi- kontinuierlich mit intervallartiger Retentatverdrängung zu fahren. Wie das Zeit- Diagramm in Fig. 5a zeigt, erfolgt diese Retentatverdrängung mit sich wiederholenden Spitzen des Retentatausflusses F4 an der Leitung 22 immer dann, wenn der Produktzufluss F1 aus Pumpe 8 stark absinkt. Ein Vorteil dieser Variante liegt in der geringen oxidativen Belastung des Retentates durch die Umgebungsluft. Diese Eigenschaft wird auch unterstützt durch das Fahren mit Schutzgas oder die Vermeidung von Verlusten an flüchtigen Waschmitteln wie Alkohol usw.

## Patentansprüche

1. Verfahren zum Eindicken von Fest/Flüssig- Gemischen unter Verwendung einer Anlage mit Membranmodulen mit Retentatkreislauf, wobei mit der im Batch- Verfahren oder quasikontinuierlich betriebenen Membrananlage in einem ersten Schritt der Retentatförderstrom in den Membranmodulen annähernd konstant gehalten wird, bis aufgrund des Eindickvorganges des Retentates der Einlaufdruck in die Membranmodule einen vorgegebenen Sollwert überschreitet, wobei in einem zweiten Schritt durch Reduktion des Retentatförderstromes der Einlaufdruck so lange konstant gehalten wird, bis ein Sollwert des Eindickungsgrades des Retentates erreicht ist und wobei dann in einem dritten Schritt das eingedickte Retentat aus dem Kreislauf abgeführt wird.

2. Verfahren nach Anspruch 1, dadurch **gekennzeichnet**, dass die Membrananlage im Querstromverfahren betrieben wird.

3. Verfahren nach Anspruch 1, dadurch **gekennzeichnet**, dass der Eindickungsgrad des Retentates durch dessen Durchfluss im Retentatkreislauf bestimmt wird.

4. Verfahren nach Anspruch 1, dadurch **gekennzeichnet**, dass in einem Teilschritt des ersten Schrittes zunächst der Einlaufdruck in die Membranmodule konstant gehalten wird, indem im Modulauslauf mit einer Drosseleinrichtung (11) ein Druckgefälle gesteuert wird.

5. Verfahren nach Anspruch 1, dadurch **gekennzeichnet**, dass vor dem zweiten oder dritten Schritt dem Retentat solange eine Auswaschflüssigkeit zugeführt wird, bis das Permeat einen vorgegebenen Brix- Wert unterschreitet.

6. Verfahren zum Eindicken von Fest/Flüssig- Gemischen unter Verwendung einer Anlage mit Membranmodulen mit Retentatkreislauf, wobei man in einem ersten Schritt den Förderstrom im Retentatkreislauf erhöht, bis der Einlaufdruck in die Membranmodule einen vorgegebenen Sollwert erreicht und dann in einem zweiten Schritt den Einlaufdruck in die Membranmodule durch Regelung des Retentatförderstromes so lange konstant hält, bis ein einem Sollwert des Eindickungsgrades des Retentates entsprechender minimaler Retentatförderstrom erreicht ist.

7. Vorrichtung zum Eindicken von Fest/Flüssig- Gemischen zur Durchführung des Verfahrens nach Anspruch 1 mit einer Anlage mit Membranmodulen, die durch Leitungen in einem Retentatkreislauf verbunden sind, **gekennzeichnet** durch a) einen Sensor (12) zur Erfassung des Einlaufdruckes einer Membranmodule (1, 2), b) mindestens eine volumetrisch fördernde Pumpe (8) im Retentatkreislauf, die mit einer Einrichtung (16) zur Veränderung der Förderleistung der Pumpe (8) ausgerüstet ist, und c) eine Auslassleitung (22) zum Abführen des Retentates aus dem Retentatkreislauf.

8. Vorrichtung nach Anspruch 7, **gekennzeichnet** durch eine volumetrisch fördernde Pumpe im Retentatkreislauf, die mit einem elektronischen Drehzahlregler ausgerüstet ist.

9. Vorrichtung nach Anspruch 7, dadurch **gekennzeichnet**, dass die volumetrisch fördernde Pumpe (8) im Retentatkreislauf eine Exzenter- Schneckenpumpe ist.

10. Vorrichtung nach Anspruch 7, dadurch **gekennzeichnet**, dass die volumetrisch fördernde Pumpe (8) im Retentatkreislauf eine Membranpumpe ist.

11. Vorrichtung nach Anspruch 10, dadurch **gekennzeichnet**, dass die Membranpumpe eine pneumatisch betriebene Pumpe ist.

12. Vorrichtung nach Anspruch 7, dadurch **gekennzeichnet**, dass die Membranmodule in mehreren Modulpassen (1, 2) angeordnet sind, von denen jede mehrere Membranmodule in Serie umfasst, dass die Modulpasse (1, 2) mit einem gemeinsamen Retentatkreislauf verbunden sind und dass in diesem Retentatkreislauf in Richtung Retentatförderstrom nach der volumetrisch fördernden Pumpe (8) ein Mengenteiler (10) zur Verteilung des Retentatförderstromes in mehrere Retentatförderströme angeordnet ist.

13. Vorrichtung nach Anspruch 12, dadurch **gekennzeichnet**, dass der Mengenteiler (10) ein statischer Mengenteiler ohne bewegliche Teile ist.

14. Vorrichtung nach Anspruch 12, dadurch **gekennzeichnet**, dass der Mengenteiler (10) ein dynamischer Mengenteiler mit Regelung des Teilverhältnisses ist.

15. Vorrichtung nach Anspruch 7, **gekennzeichnet** durch einen Behälter (5) für das Fest/Flüssig- Gemisch, der ansaugseitig direkt vor der volumetrisch fördernden Pumpe (8) im Retentatkreislauf angeordnet ist.

16. Vorrichtung nach Anspruch 15, **gekennzeichnet** durch eine Leitung von weniger als drei Meter Länge, durch welche die volumetrisch fördernde Pumpe (8) im Retentatkreislauf ansaugseitig mit dem Behälter (5) für das Fest/Flüssig- Gemisch verbunden ist.

17. Vorrichtung nach einem der Ansprüche 15 oder 16, dadurch **gekennzeichnet**, dass der Behälter (5) für das Fest/Flüssig- Gemisch ein Rührwerk (7) aufweist.

18. Vorrichtung nach Anspruch 7, dadurch **gekennzeichnet**, dass in Fliessrichtung nach der volumetrisch fördernden Pumpe (8) im Retentatkreislauf ein Homogenisator (9) angeordnet ist.

19. Vorrichtung nach Anspruch 7, dadurch **gekennzeichnet**, dass in Fliessrichtung nach den Membranmodulen im Retentatkreislauf eine Drosseleinrichtung (11) angeordnet ist.

20. Vorrichtung nach Anspruch 19, dadurch **gekennzeichnet**, dass die Drosseleinrichtung (11) ein Servoregelventil ist.

21. Vorrichtung nach Anspruch 19, dadurch **gekennzeichnet**, dass die Drosseleinrichtung eine im Durchfluss veränderbare volumetrische Pumpe (30) ist.

22. Vorrichtung nach Anspruch 19, dadurch **gekennzeichnet**, dass die Drosseleinrichtung eine Exzenterschnecken-Pumpe ist.

23. Vorrichtung nach Anspruch 7, dadurch **gekennzeichnet**, dass die Membranmodule in mindestens einer Modulpasse (1, 2) angeordnet sind, welche mehrere Membranmodule in Serie umfasst und dass die Modulpasse (1, 2) eintrittsseitig mit einer Druckmesseinrichtung (12, 13) versehen sind, deren Messignale elektrisch oder pneumatisch einer Drosseleinrichtung (11) im Retentatkreislauf und der volumetrisch fördernden Pumpe (8) zugeführt sind.

24. Vorrichtung nach Anspruch 7, dadurch **gekennzeichnet**, dass die Membranmodule in mindestens einer Modulpasse (1, 2) angeordnet sind, welche mehrere Membranmodule in Serie umfasst und dass die Modulpasse permeatseitig eine Brix- Messeinrichtung (19) aufweist, deren Messignale elektrisch einem Wasserzulaufventil (18) für den Retentatkreislauf zugeführt sind.

25. Vorrichtung nach Anspruch 7, **gekennzeichnet** durch Membranmodule, welche in mindestens einer Modulpasse (1, 2) angeordnet sind, welche mehrere Membranmodule in Serie umfasst, und durch eine nach den Modulpassen (1, 2) angeordnete Retentatleitung (3) im Retentatkreislauf, welche in zwei Stränge aufgeteilt ist, von denen ein Strang mit einer Drosseleinrichtung (11) und der andere Strang mit einem Ausgangsventil (21) für das Retentat in Verbindung steht.

## Claims

1. Process for concentrating solid/liquid mixtures using an installation with membrane modules with a retentate circuit, in which, in a first step, the discontinuously or quasi-continuously operating membrane installation keeps the flow rate of the retentate into the membrane modules approximately constant until the entry pressure into the membrane modules exceeds a predetermined nominal value as a result of the concentration of the retentate, in a second step, the entry pressure is kept constant by reducing the flow rate of the retentate until a nominal value for the degree of concentration of the retentate has been achieved and then, in a third step, the concentrated retentate is discharged from the circuit.

2. Process according to claim 1, characterised in that the membrane installation is operated in cross-flow mode.

3. Process according to claim 1, characterised in that the degree of concentration of the retentate is determined by its flow rate in the retentate circuit.

4. Process according to claim 1, characterised in that, in a partial step of the first step, the entry pressure into the membrane modules is initially kept constant by controlling a drop in pressure in the module outlet by a throttling means (11).

5. Process according to claim 1, characterised in that, before the second or third step, a washing fluid is supplied to the retentate until the permeate falls below a predetermined Brix value.

6. Process for concentrating solid/liquid mixtures using an installation with membrane modules with a retentate circuit, in which, in a first step, the flow rate in the retentate circuit is increased until the entry pressure into the membrane modules reaches a predetermined nominal value and then, in a second step, the entry pressure into the membrane modules is kept constant by controlling the flow rate of the retentate until a minimum flow rate of the retentate corresponding to a nominal value for the degree of concentration of the retentate has been achieved.

7. Device for concentrating solid/liquid mixtures for carrying out the process according to claim 1 with an installation with membrane modules connected by lines in a retentate circuit, characterised by a) a sensor (12) for detecting the entry pressure of a membrane module (1, 2), b) at least one positive displacement pump (8) in the retentate circuit provided with a means (16) for varying the delivery rate of the pump (8) and c) an outlet line (22) for discharging the retentate from the retentate circuit.

8. Device according to claim 7, characterised by a positive displacement pump in the retentate circuit provided with an electronic speed controller.

9. Device according to claim 7, characterised in that the positive displacement pump (8) in the retentate circuit is a helical rotor pump.

10. Device according to claim 7, characterised in that the positive displacement pump (8) in the retentate circuit is a membrane pump.

11. Device according to claim 10, characterised in that the membrane pump is a pneumatically operated pump.

12. Device according to claim 7, characterised in that the membrane modules are arranged in several module passes (1, 2), each of which includes several membrane modules arranged in series, that the module passes (1, 2) are connected to a common retentate circuit and that a flow divider (10) is arranged in this retentate circuit downstream of the positive displacement pump (8) in the direction of the flow of the retentate for dividing the retentate flow into several retentate flows.

13. Device according to claim 12, characterised in that the flow divider (10) is a static flow divider without moving parts.

14. Device according to claim 12, characterised in that the flow divider (10) is a dynamic flow divider with control of the division ratio.

15. Device according to claim 7, characterised by a container (5) for the solid/liquid mixture arranged in the retentate circuit at the suction side directly upstream of the positive displacement pump (8).

16. Device according to claim 15, characterised by a line having a length of less than three metres, by means of which the positive displacement pump (8) in the retentate circuit is connected at the suction side to the container (5) for the solid/liquid mixture.

17. Device according to one of claims 15 or 16, characterised in that the container (5) for the solid/liquid mixture has an agitator (7).

18. Device according to claim 7, characterised in that a homogeniser (9) is arranged in the retentate circuit downstream of the positive displacement pump (8) in the flow direction.

19. Device according to claim 7, characterised in that a throttling means (11) is arranged in the retentate circuit downstream of the membrane modules in the flow direction.

20. Device according to claim 19, characterised in that the throttling means (11) is a servo-control valve.

21. Device according to claim 19, characterised in that the throttling means is a variable output positive displacement pump (30).

22. Device according to claim 19, characterised in that the throttling means is a helical rotor pump.

23. Device according to claim 7, characterised in that the membrane modules are arranged in at least one module pass (1, 2) including several membrane modules arranged in series and that the module passes (1, 2) are provided at the inlet side with a pressure gauge (12, 13), the measuring signals of which are conveyed electrically or pneumatically to a throttling means (11) in the retentate circuit and to the positive displacement pump (8).

24. Device according to claim 7, characterised in that the membrane modules are arranged in at least one module pass (1, 2) including several membrane modules arranged in series and that the module pass is provided at the permeate side with a Brix measuring device (19), the measuring signals of which are conveyed electrically to a water-inlet valve (18) for the retentate circuit.

25. Device according to claim 7, characterised by membrane modules arranged in at least one module pass (1, 2) including several membrane modules arranged in series, and by a retentate line (3) which is arranged in the retentate circuit downstream of the module passes (1, 2) and is divided into two branches, one branch of which is connected to a throttling means (11) and the other branch of which is connected to an outlet valve (21) for the retentate.

## Revendications

1. Procédé d'épaississement de mélanges solides/liquides, avec utilisation d'une installation comportant des modules à membranes avec un circuit de rétentat, selon lequel, au moyen d'une installation à membranes exploitée selon le procédé par charges successives ou de façon quasi-continue, on maintient, dans une première étape, le débit de rétentat dans les modules à membranes approximativement constant jusqu'à ce que, en raison du processus d'épaississement du rétentat, la pression d'entrée dans les modules à membrane dépasse une valeur de consigne préfixée, selon lequel on maintient, dans une deuxième étape, par réduction du débit de rétentat, la pression d'entrée constante jusqu'à ce qu'une valeur de consigne du degré d'épaississement du rétentat soit atteinte et selon lequel, ensuite, dans une troisième étape, on évacue le rétentat épaissi du circuit.

2. Procédé selon la revendication 1, caractérisé en ce qu'on fait fonctionner l'installation à membranes selon le procédé à courant transversal.

3. Procédé selon la revendication 1, caractérisé en ce qu'on détermine le degré d'épaississement du rétentat par son débit dans le circuit de rétentat.

4. Procédé selon la revendication 1, caractérisé en ce que, dans une partie de la première étape, on maintient initialement la pression d'entrée dans les modules à membranes constante en contrôlant, au moyen d'un dispositif d'étranglement (11), une perte de pression dans la sortie des modules.

5. Procédé selon la revendication 1, caractérisé en ce que, avant la deuxième ou la troisième étape, on amène au rétentat un liquide de lavage jusqu'à ce que le perméat descende au-dessous d'une valeur de Brix prédéterminée.

6. Procédé d'épaississement de mélanges solides/liquides, avec utilisation d'une installation comportant des modules à membranes avec un circuit de rétentat, selon lequel, dans une première étape, on augmente le débit dans le circuit de rétentat jusqu'à ce que la pression d'entrée dans les modules à membranes atteigne une valeur de consigne prédéterminée puis, dans une deuxième étape, on maintient la pression d'entrée dans les modules à membranes constante, par régulation du débit de rétentat, jusqu'à ce que soit atteint un débit de rétentat minimal correspondant à une valeur de consigne du degré d'épaississement du rétentat.

7. Dispositif d'épaississement de mélanges de solides/liquides pour la mise en oeuvre du procédé selon la revendication 1, possédant une installation comportant des modules à membranes qui sont raccordés par des conduites dans un circuit de rétentat, caractérisé par a) un capteur (12) pour détecter la pression d'entrée d'un module à membranes (1, 2), b) au moins une pompe de refoulement volumétrique (8) dans le circuit de rétentat, qui est équipée d'un dispositif (16) pour varier la capacité de refoulement de la pompe (8), et c) une conduite de sortie (22) pour évacuer le rétentat du circuit de rétentat.

8. Dispositif selon la revendication 7, caractérisé par une pompe de refoulement volumétrique, dans le circuit de rétentat, qui est équipée d'un régulateur électronique de vitesse de rotation.

9. Dispositif selon la revendication 7, caractérisé en ce que la pompe de refoulement volumétrique (8) dans le circuit de rétentat est une pompe à vis excentrique.

10. Dispositif selon la revendication 7, caractérisé en ce que la pompe de refoulement volumétrique (8) dans le circuit de rétentat est une pompe à membrane.

11. Dispositif selon la revendication 10, caractérisé en ce que la pompe à membrane est une pompe mue pneumatiquement.

12. Dispositif selon la revendication 7, caractérisé en ce que les modules à membranes sont agencés en plusieurs séries ou passes de modules (1, 2) comprenant chacune plusieurs modules à membranes en série, que les passes de modules (1, 2) sont reliées à un circuit de rétentat commun et qu'un diviseur de débit (10), servant à diviser le débit de rétentat en plusieurs débits de rétentat, est installé en aval de la pompe de refoulement volumétrique (8) dans ce circuit de rétentat.

13. Dispositif selon la revendication 12, caractérisé en ce que le diviseur de débit (10) est un diviseur statique sans parties mobiles.

14. Dispositif selon la revendication 12, caractérisé en ce que le diviseur de débit (10) est un diviseur dynamique avec régulation du rapport de division.

15. Dispositif selon la revendication 7, caractérisé par un récipient (5) pour le mélange solide/liquide, qui est installé côté aspiration dans le circuit de rétentat, directement en amont de la pompe de refoulement volumétrique (8).

16. Dispositif selon la revendication 15, caractérisé par une conduite de moins de trois mètres de longueur, par laquelle la pompe de refoulement volumétrique (8) est reliée, dans le circuit de rétentat, côté aspiration, au récipient (5) pour le mélange solide/liquide.

17. Dispositif selon la revendication 15 ou 16, caractérisé en ce que le récipient (5) pour le mélange solide/liquide comporte un agitateur (7).

18. Dispositif selon la revendication 7, caractérisé en ce qu'un homogénéisateur (9) est installé dans le sens de l'écoulement après la pompe de refoulement volumétrique (8) dans le circuit de rétentat.

19. Dispositif selon la revendication 7, caractérisé en ce qu'un dispositif d'étranglement (11) est installé dans le sens de l'écoulement après les modules à membranes dans le circuit de rétentat.

20. Dispositif selon la revendication 19, caractérisé en ce que le dispositif d'étranglement (11) est une vanne de réglage asservie.

21. Dispositif selon la revendication 19, caractérisé en ce que le dispositif d'étranglement est une pompe volumétrique (30) à débit variable.

22. Dispositif selon la revendication 19, caractérisé en ce que le dispositif d'étranglement est une pompe à vis excentrique.

23. Dispositif selon la revendication 7, caractérisé en ce que les modules à membranes sont agencés en au moins une passe de modules (1, 2) qui comprend plusieurs modules à membranes en série et que les passes de modules (1, 2) sont pourvues, côté entrée, d'un dispositif de mesure de pression (12, 13) dont les signaux de mesure sont appliqués électriquement ou pneumatiquement à un dispositif d'étranglement (11) dans le circuit de rétentat et à la pompe de refoulement volumétrique (8).

24. Dispositif selon la revendication 7, caractérisé en ce que les modules à membranes sont agencés en au moins une passe de modules (1, 2) qui comprend plusieurs modules à membranes en série et que la passe de modules présente, côté perméat, un dispositif de mesure de Brix (19) dont les signaux de mesure sont appliqués électriquement à une vanne d'arrivée d'eau (18) pour le circuit de rétentat.

25. Dispositif selon la revendication 7, caractérisé par des modules à membranes agencés en au moins une passe de modules (1, 2) qui comprend plusieurs modules à membranes en série, ainsi que par une conduite de rétentat (3) disposée en aval des passes de modules (1, 2) dans le circuit de rétentat, conduite qui est divisée en deux branches dont l'une communique avec un dispositif d'étranglement (11) et l'autre avec une vanne de sortie (21) pour le rétentat.
